# EUROPÄISCHE PATENTSCHRIFT

(11) **EP 3 782 928 B1**
(45) Veröffentlichungstag und Bekanntmachung des Hinweises auf die Patenterteilung: **23.11.2022**
(21) Anmeldenummer: 19193379.5
(22) Anmeldetag: 23.08.2019
(51) Int. Cl.: B65G 1/02, B65G 1/04

(54) **STAPELLAGERANORDNUNG**
STACK STORAGE ASSEMBLY
DISPOSITIF DE STOCKAGE PAR EMPILEMENT

(43) Veröffentlichungstag der Anmeldung: 24.02.2021
(73) Patentinhaber: Jungheinrich Aktiengesellschaft, 22047 Hamburg (DE)
(72) Erfinder: Cavelius, Jörg, 61118 Bad Vilbel (DE); Becker, Michael, 63512 Hainburg (DE); Liebhaber, Markus, 61440 Oberursel (DE); Nowack, Adrian, 55131 Mainz (DE)
(74) Vertreter: Keil & Schaafhausen Patentanwälte PartGmbB

(56) Entgegenhaltungen:
- EP-A1- 2 907 410
- CN-A- 110 065 750
- DE-A1- 2 241 061
- DE-U1- 20 309 331
- US-A1- 2003 206 789

## Beschreibung

Die vorliegende Erfindung betrifft eine Stapellageranordnung für Behälter mit mehreren Ständern, die durch Querverbinder miteinander verbunden sind.

Eine derartige Stapellageranordnung ist beispielsweise aus DE 42 03 823 C2 oder CN 110 065 750 A bekannt.

In einer Stapellageranordnung können Behälter in Form von Stapeln gelagert werden, d.h. mehrere Behälter sind in Schwerkraftrichtung übereinander angeordnet. Derartige Stapel können relativ eng benachbart angeordnet sein, so dass man einen zur Verfügung stehenden Bauraum mit einem hohen Nutzungsgrad nutzen kann. Die Ständer können hierbei an Ecken von Behälteraufnahmeräumen angeordnet sein. Die Querverbinder dienen dazu, der ganzen Anordnung eine gewisse mechanische Stabilität zu verleihen.

Bei einer derartigen Stapellageranordnung gibt es mehrere Möglichkeiten. Man kann die Behälter von oben auf den jeweiligen Stapel aufsetzen und auch von dort entnehmen oder man kann die Behälter von unten an den Stapel ansetzen und auch von dort entnehmen. Im ersten Fall kann man die Ständer verwenden, um eine Fahrfläche abzustützen, auf der Bedienungsgeräte verfahren werden können, mit denen man die Behälter aus der Stapellageranordnung entnehmen kann. Im letzten Fall dienen die Ständer beispielsweise dazu, eine obere Abdeckung zu tragen, um die Stapellageranordnung abschließen zu können.

US 2003/0 206 789 A1 zeigt ein automatisches Lager mit mehreren Gestellen, von denen jedes mehrere Fächer aufweist, die mithilfe eines Lagerbediengeräts beschickt und entleert werden können. Um den Spalt zu überbrücken, der für das Lagerbediengerät freigehalten werden muss, sind Platten vorgesehen, die auf Stützelementen abgelegt und befestigt werden können, damit eine Bedienungsperson Wartungsarbeiten vornehmen kann. Jedes Stützelement wird in einer Klammer eingelegt, die an einem Ständer befestigt ist.

DE 203 09331 U1 offenbart den Oberbegriff von Anspruch 1 und zeigt eine Tragkonstruktion für ein Schrank- oder Regalbausystemen

Die Tragkonstruktion umfasst horizontale und vertikale sternförmige Trag-elemente. Jedes Tragelement weist längs verlaufende Tragnuten auf, in die ein Kopf einer Schraube eingesetzt werden kann. Die Schraube kann dann mit einem Gewindeabschnitt in ein Innengewinde eines anderen Tragelements eingeschraubt werden. Wenn das erste Tragelement einen kreisrunden Querschnitt aufweist, kann ein Zwischenstück zwischen den beiden Tragelementen angeordnet werden, das eine Ausnehmung aufweist, die an die Außenkontur des Tragelements angepasst ist.

Der Aufbau einer derartigen Stapellageranordnung erfordert einen erheblichen Aufwand. Der Erfindung liegt die Aufgabe zugrunde, den Aufwand beim Aufbau einer Stapellageranordnung klein zu halten.

Diese Aufgabe wird bei einer Stapellageranordnung der eingangs genannten Art dadurch gelöst, dass mindestens ein Querverbinder über Anbindungselemente mit Ständern ver bunden ist, von denen jedes an einer Anlagefläche eines Ständers anliegt, und die Anlagefläche einen Schlitz aufweist, in dem mindestens eine das Anbindungselement durchragende selbstschneidende oder selbstfurchende Schraube eingeschraubt ist.

Mit einer derartigen Anordnung ist es nicht mehr erforderlich, die Ständer und die Querverbinder vor dem Verbinden so exakt zueinander auszurichten, dass Bohrungen in den Anbindungselementen und in den Ständern in einem ausreichenden Maße übereinstimmen. Vielmehr kann das Anbindungselement gegenüber dem jeweiligen Ständer in Richtung des Schlitzes bewegt werden. In den Schlitz kann eine Schraube eingeschraubt werden. Diese Schraube ist erfindungsgemäß selbstschneidend oder selbstfurchend, d.h. sie erzeugt ihr Gewinde selbst. Da bereits ein Schlitz vorhanden ist, ist es nicht erforderlich, hierfür eine Bohrung herzustellen.

Vorzugsweise geht der Schlitz über die Länge des Ständers durch. Damit ist es möglich, die Querverbinder praktisch an jeder beliebigen Position der Ständer zu befestigen. Man kann auch mehrere Querverbinder über die Länge des Ständers verteilen, ohne dass hier eine exakte Ausrichtung erforderlich wäre.

Bevorzugterweise ist der Schlitz in einem Vorsprung ausgebildet und das Anbindungselement umgreift den Vorsprung seitlich. Im Vorsprung kann man eine ausreichende Materialstärke vorsehen. Damit wird die Schraube in ausreichendem Maße gehalten. Wenn das Anbindungselement den Vorsprung seitlich umgreift, kann man ein Spreizen des Ständers im Bereich des Vorsprungs vermeiden, so dass die Schraube auch sicher gehalten wird. Es ist dabei nicht erforderlich, dass das Anbindungselement seitlich über den Ständer hinausragt.

Bevorzugterweise weist der Vorsprung Außenseiten auf, die gegenüber einer Achse der Schraube geneigt sind. Wenn es sich um eine symmetrische Neigung handelt, dann hat der Vorsprung im Querschnitt die Form eines Trapezes. Wenn das Anbindungselement mit der Schraube festgezogen wird, dann wirkt das Anbindungselement auf die Außenseiten des Vorsprungs und drängt die Außenseiten nach innen, so dass eine seitliche Kraft auf die Schraube ausgeübt wird, die die Haltefähigkeit und die Tragfähigkeit weiter erhöht.

Vorzugsweise weist das Anbindungselement geneigte Innenseiten auf, deren Neigung an die zugehörigen Außenseiten angepasst ist. Damit ergibt sich eine Paarung von Keilflächen, die beim Anziehen der Schraube in Richtung einer Verringerung der Breite des Schlitzes wirken und damit der Schraube eine ausreichende Haltekraft vermitteln.

Bevorzugterweise erstreckt sich der Schlitz bis in einen Hohlraum des Ständers. Der Ständer kann also hohl ausgebildet sein, was die Masse verringert und damit den Transport erleichtert. Darüber hinaus kann man durch Verwendung eines Ständers mit Hohlraum größere Toleranzen bei der Länge der Schraube zulassen, mit der das Anbindungselement mit dem Ständer verbunden wird. Darüber hinaus hat diese Ausgestaltung den Vorteil, dass die Herstellung des Ständers wirtschaftlich gestaltet werden kann. Wenn der Schlitz eine Verbindung vom Hohlraum nach außen herstellt, ist der Hohlraum nicht mehr geschlossen. Geschlossene Hohlräume sind bei einer Herstellung durch Extrusion weitaus aufwendiger herzustellen.

Vorzugsweise ist der Ständer als Strangpresselement oder Rollformprofil ausgebildet. Ein Strangpresselement lässt sich kostengünstig fertigen. Es kann beispielsweise durch Extrusion hergestellt werden. Auch ein Rollformprofil lässt sich kostengünstig fertigen und ist als Halbzeug erhältlich.

Vorzugsweise sind drei Arten von Ständern vorgesehen, wobei eine erste Art einen kreuzartigen Querschnitt, eine zweite Art einen T-förmigen Querschnitt und eine dritte Art einen abgewinkelten Querschnitt aufweist. Mit diesen drei Arten von Ständern kann man alle möglichen Konstellationen in einer Stapellageranordnung abdecken. Die erste Art von Ständern mit kreuzartigem Querschnitt kann inmitten der Stapellageranordnung angeordnet werden. Die zweite Art mit T-förmigem Querschnitt kann entlang den Rändern der Stapellageranordnung angeordnet werden. Die dritte Art mit abgewinkeltem Querschnitt kann an den Ecken der Stapellageranordnung angeordnet werden. Damit ist es möglich, die Stapellageranordnung an allen Seiten mit "glatten" Flächen auszubilden, also ohne, dass Elemente der Ständer nach außen vorstehen.

Bevorzugterweise sind die Ständer der ersten Art in Reihen angeordnet, wobei die Ständer einer Reihe auf Lücke zu Ständern einer benachbarten Reihe angeordnet sind. Es ist also nicht erforderlich, an jeder Ecke eines jeden Behälterstapels, also an jeder Ecke eines Behälteraufnahmeraums, einen Ständer anzuordnen. Es reicht vielmehr aus, wenn die Ständer der ersten Art beispielsweise an Diagonalen der Behälteraufnahmeräume angeordnet sind. Damit spart man zum einen Material ein. Zum anderen bleibt ein Raum zwischen den Behälteraufnahmeräumen frei, den man beispielsweise verwenden kann, um eine Feuerlöscheinrichtung hier anzuordnen.

Bevorzugterweise weisen die Querverbinder einen Schlitz auf, in den eine das Anbindungselement durchragende Schraube eingeschraubt ist. Man kann für die Befestigung der Querverbinder am Anbindungselement die gleiche Vorgehensweise verwenden wie beim Befestigen der Anbindungselemente an den Ständern.

Vorzugsweise ist der Schlitz in einem Vorsprung angeordnet, den das Anbindungselement seitlich umgreift. Auch hier verhindert das Anbindungselement, dass sich der Schlitz beim Einschrauben der Schraube erweitert, also seine Breite vergrößert, so dass die Schraube mit der notwendigen Kraft im Schlitz festgehalten werden kann.

Bevorzugterweise weist der Vorsprung Seitenflanken auf, die zu einer Achse der Schraube geneigt sind, und das Anbindungselement weist insbesondere geneigte Innenseiten auf, deren Neigung an die Neigung der Seitenflanken angepasst ist. Damit wirkt das Anbindungselement auf Keilflächen, so dass die Seiten des Vorsprungs in Richtung auf eine Verringerung der Breite des Schlitzes belastet werden.

Vorzugsweise weist das Anbindungselement einen Tragabschnitt auf, an dem der Querverbinder befestigt ist, wobei der Tragabschnitt unterhalb des Querverbinders angeordnet ist. Dies erleichtert die Herstellung. Man verbindet zunächst das Anbindungselement mit dem Ständer an der gewünschten Höhe. Danach kann man den Querverbinder auf das Anbindungselement oder auf zwei Anbindungselemente auflegen und ggfs. die Anbindungselemente in gewünschter Weise ausrichten. Danach muss man lediglich noch eine oder mehrere Schrauben in jedes Anbindungselement einschrauben und der Querverbinder ist an dem Anbindungselement befestigt. Da auch der Querverbinder einen Schlitz aufweist, kann man hier gewisse Längentoleranzen akzeptieren.

Vorzugsweise ist der Querverbinder als Strangpresselement oder Rollformprofil ausgebildet. Ein Strangpresselement oder Rollformprofil lässt sich kostengünstig herstellen. Man kann es in beliebiger Länge von einem Halbzeug ablängen. Dies kann bei den Querverbindern durchaus vor Ort passieren.

Vorzugsweise erstreckt sich der Schlitz bis in einen Hohlraum im Querverbinder. Durch den Hohlraum kann der Querverbinder mit geringer Masse ausgebildet werden. Der Hohlraum erlaubt große Toleranzen bei der Länge der verwendeten Schraube.

Die Erfindung wird im Folgenden anhand eines bevorzugten Ausführungsbeispiels in Verbindung mit einer Zeichnung beschrieben. Hierin zeigen:
- Fig. 1: eine schematische Darstellung einer Stapellageranordnung,
- Fig. 2: einen vergrößerten Ausschnitt aus Fig. 1,
- Fig. 3: eine vergrößerte Darstellung zur Erläuterung der Verbindung von Ständer und Querverbinder,
- Fig. 4: einen Ausschnitt aus Fig. 3 in Ansicht von unten,
- Fig. 5: eine erste Art von Ständern,
- Fig. 6: eine zweite Art von Ständern,
- Fig. 7: eine dritte Art von Ständern,
- Fig. 8: einen Schnitt durch einen Ständer im Bereich von Anbindungselementen und
- Fig. 9: einen Schnitt durch einen Querverbinder im Bereich eines Anbindungselements.

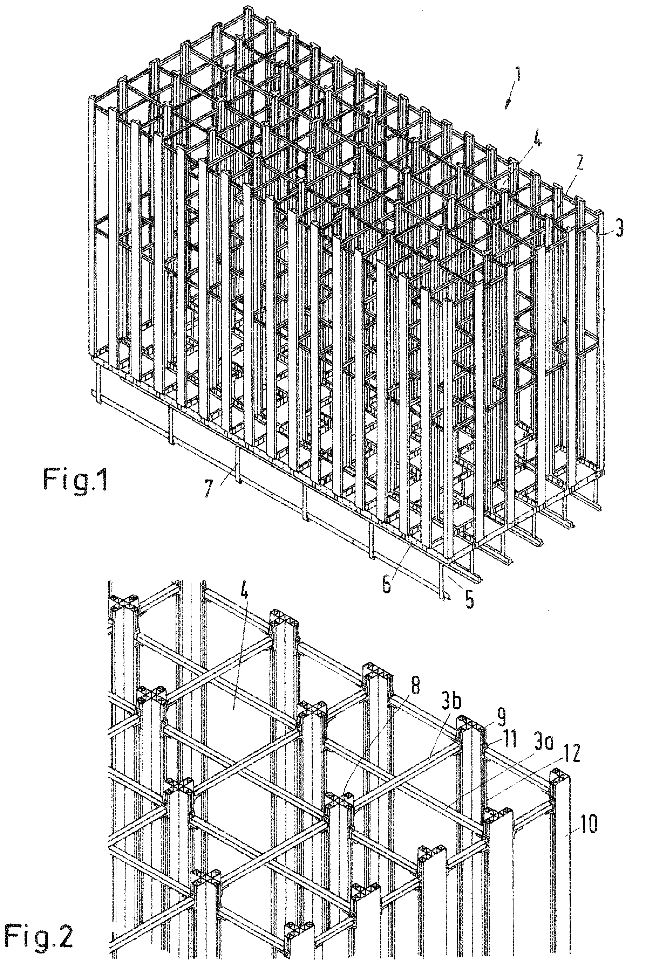

Fig. 1 zeigt schematisch eine Stapellageranordnung 1 mit Ständern 2, die durch Querverbinder 3 miteinander verbunden sind.

In der Stapellageranordnung sind mehrere Behälteraufnahmeräume 4 vorgesehen. Die Behälteraufnahmeräume 4 sind in Form einer Matrix angeordnet, d.h. es gibt Spalten und Reihen von Behälteraufnahmeräumen. Im vorliegenden Fall gibt es fünf Spalten und sechzehn Reihen.

Unterhalb der Behälteraufnahmeräume 4 ist ein Beschickungsraum 5 angeordnet, in den man ein Beschickungsfahrzeug einfahren lassen kann, um einen Behälter in die Stapellageranordnung einzubringen oder einen Behälter aus der Stapellageranordnung zu entnehmen.

Der Begriff "Behälter" ist hier nicht auf geschlossene Behälter beschränkt. Unter einem "Behälter" wird hier eine Einrichtung verstanden, die in der Lage ist, Produkte aufzunehmen und die stapelbar ist. Der "Behälter" kann also auch seitlich offen sein.

Die Ständer 2 sind an einem Rahmen 6 befestigt, der über Stützelemente 7 auf dem Fußboden oder einer anderen Aufstandsfläche aufsteht.

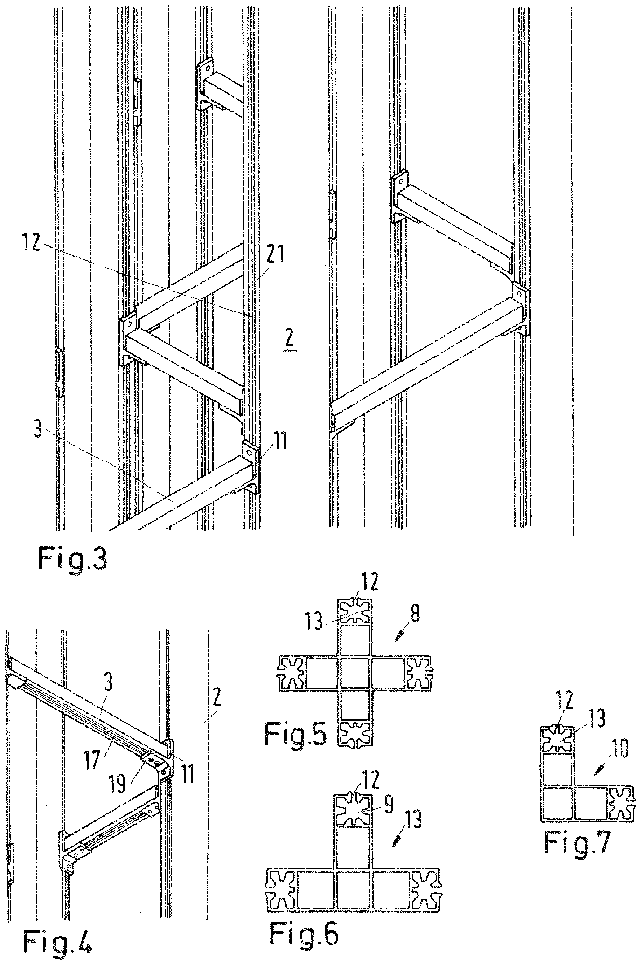

Wie man in Fig. 2 und in den Fig. 5 bis 7 erkennen kann, gibt es drei Arten von Ständern. Eine erste Art 8 von Ständern ist in Fig. 5 dargestellt. Die erste Art 8 von Ständern hat einen kreuzartigen Querschnitt, d.h. es gibt vier Möglichkeiten, ein Anbindungselement 11 zu befestigen.

Eine zweite Art 9 von Ständern ist in Fig. 6 dargestellt. Die zweite Art 9 hat einen T-förmigen Querschnitt, d.h. es gibt drei Möglichkeiten, ein Anbindungselement 11 zu befestigen.

Die dritte Art 10 von Ständern, die in Fig.7 dargestellt ist, hat einen abgewinkelten Querschnitt, d.h. es gibt zwei Möglichkeiten, ein Anbindungselement 11 zu befestigen.

Wie man in Fig. 2 erkennen kann, sind Ständer der ersten Art 8 inmitten der Stapellageranordnung angeordnet. Ständer der zweiten Art 9 sind entlang der Längs- und Querseiten der Stapellageranordnung angeordnet. Ständer der dritten Art 10 sind an den Ecken der Stapellageranordnung angeordnet.

Wie man insbesondere in Fig. 2 erkennen kann, sind die Ständer 8 der ersten Art in mehreren Reihen angeordnet, wobei die Ständer in den Reihen auf Lücke angeordnet sind. Bei einem Behälteraufnahmeraum 4 im Inneren der Stapellageranordnung befindet sich also nicht an jeder Ecke des Behälteraufnahmeraums 4 ein Ständer, sondern die Ständer sind nur an diagonal gegenüberliegenden Ecken angeordnet.

Zur Befestigung von Querverbindern 3 an Ständern 2 ist das bereits erwähnte Anbindungselement 11 vorgesehen.

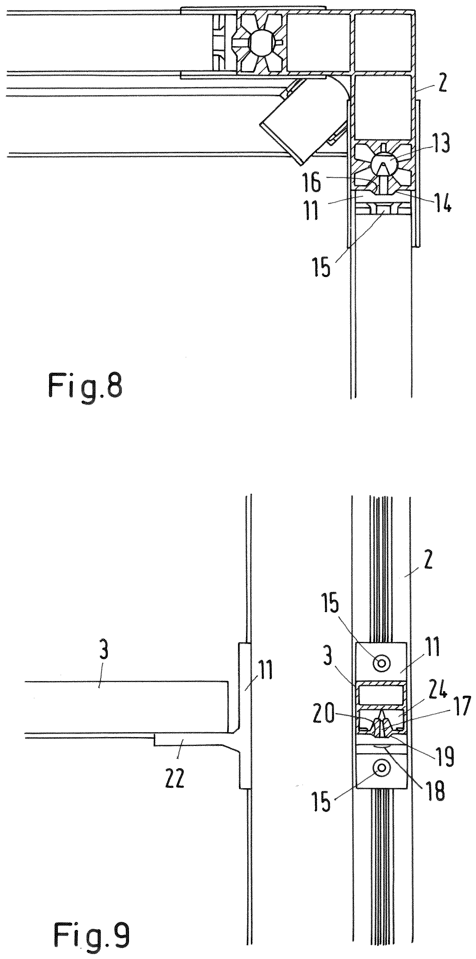

Um das Anbindungselement 11 am Ständer 2 befestigen zu können, weist der Ständer 2 einen Schlitz 12 auf. Der Schlitz 12 kann sich über die gesamte Länge des entsprechenden Ständers 2 erstrecken. Er erstreckt sich nach innen bis in einen Hohlraum 13. Der Schlitz 12 ist dabei in einem Vorsprung 14 (Fig. 8) ausgebildet. Der Vorsprung 14 hat geneigte Außenseiten. Wenn in den Schlitz 12 eine Schraube 15 eingeschraubt wird, dann sind die Außenseiten gegenüber einer Achse der Schraube 15 geneigt. Die Achse der Schraube 15 ist die Rotationsachse, um die die Schraube 15 beim Einschrauben gedreht wird.

Das Anbindungselement 11 weist entsprechend geneigte Innenseiten 16 auf, d.h. die Neigung der Innenseiten 16 ist an die Neigung der entsprechenden Außenseiten des Vorsprungs 14 angepasst. Wenn das Anbindungselement beim Festziehen der Schraube 15 zur Anlage an den Ständer 2 gebracht wird, dann wirken die Innenseiten 16 des Anbindungselements 11 und die Außenseiten des Vorsprungs 14 als Keilflächen zusammen, so dass verhindert wird, dass sich die Breite des Schlitzes 12 beim Einschrauben der Schraube 15 vergrößert. Damit ergibt sich eine definierte Breite des Schlitzes 12, an die die Schraube 15 angepasst werden kann.

Die Schraube 15 ist eine selbstfurchende oder selbstschneidende Schraube. Das Gewinde der Schraube 15 steht dann zwar nicht über seinen vollen Umfang mit dem Ständer 2 und dem Vorsprung 14 in Verbindung. Der Eingriff zwischen dem Vorsprung 14 und der Schraube 15 reicht aber aus, um eine Spannkraft erzeugen zu können, mit der das Anbindungselement 11 sicher am Ständer 2 gehalten wird.

Der Schlitz 12 geht über die gesamte Länge des Ständers 2 durch. Damit ist es im Grunde möglich, ein Anbindungselement 11 an jeder Position am Ständer 2 zu montieren.

Der daraus resultierende Vorteil ist beispielsweise aus Fig. 2 ersichtlich. Querverbinder 3a, die in eine Richtung verlaufen, sind in einer anderen Höhe montiert als Querverbinder 3b, die quer zu den erst genannten Querverbindern 3a verlaufen. Dementsprechend sind auch die dazu gehörigen Anbindungselemente 11 in unterschiedlichen Höhen montiert.

Die Querverbinder 3 sind auf ähnliche Weise mit den Anbindungselementen 11 verbunden. Dies lässt sich anhand von Fig. 9 erkennen. Jeder Querverbinder 3 weist wiederum einen Schlitz 17 auf, in den eine Schraube 18, die das Anbindungselement 11 durchragt, eingeschraubt ist. Der Schlitz 17 ist wiederum in einem Vorsprung 19 angeordnet, der geneigte Außenseiten aufweist. Die Außenseiten sind zur Rotationsachse der Schraube 18 hin geneigt. Das Anbindungselement 11 weist eine Ausnehmung mit geneigten Innenseiten auf, deren Neigung an die Neigung der Außenseiten des Vorsprungs 19 angepasst sind. Damit ergibt sich hier die gleiche technische Wirkung wie bei der Befestigung des Anbindungselements 11 an dem Ständer 2. Der Querverbinder 3 weist ebenfalls einen Hohlraum 24 auf. Der Schlitz 17 erstreckt sich bis in den Hohlraum. Wenn die Schraube 18 in den Schlitz 17 eingeschraubt wird, kann sie bis in den Hohlraum 24 hineinragen.

Die Montage einer derartigen Stapellageranordnung gestaltet sich relativ einfach. Ein Anbindungselement 11 wird an einem Ständer befestigt, in dem es an eine Anlagefläche 21 des Ständers 2 zur Anlage gebracht wird und dabei den Vorsprung 14 umgreift. Das Anbindungselement 11 kann dann noch parallel zur Längserstreckung des Ständers 2 verschoben werden, bis es seine gewünschte Position erreicht hat. Danach ist es lediglich erforderlich, das Anbindungselement mit zwei Schrauben 15 am Ständer 2 zu befestigen.

In gleicher Weise befestigt man ein weiteres Anbindungselement 11 an einem gegenüberliegenden Ständer 2. Das Anbindungselement 11 weist einen Tragabschnitt 22 auf, der zu dem jeweils anderen Ständer 2 hin gerichtet ist. Auf diesen Tragabschnitt 22 wird dann der Querverbinder 3 aufgelegt und mit ein oder zwei Schrauben mit dem Anbindungselement 11 verbunden.

Sowohl die Ständer 2 als auch die Querverbinder 3 können als Strangpresselemente ausgebildet sein, beispielsweise aus Aluminium. Man kann die Ständer 2 und die Querverbinder 3 auch als Rollprofile ausbilden.

## Patentansprüche

1. Stapellageranordnung (1) für Behälter mit mehreren Ständern (2), die durch Querverbinder (3) miteinander verbunden sind, wobei mindestens ein Querverbinder (3) über Anbindungselemente (11) mit Ständern (2) verbunden ist, von denen jedes an einer Anlagefläche (21) eines Ständers (2) anliegt, **dadurch gekennzeichnet, dass** die Anlagefläche (21) einen Schlitz (12) aufweist, in den mindestens eine das Anbindungselement (11) durchdringende, selbstschneidende oder selbstfurchende Schraube (15) eingeschraubt ist.

2. Stapellageranordnung nach Anspruch 1, **dadurch gekennzeichnet, dass** der Schlitz (12) über die Länge des Ständers (2) durchgeht.

3. Stapellageranordnung nach Anspruch 1 oder 2, **dadurch gekennzeichnet, dass** der Schlitz (12) in einem Vorsprung (14) ausgebildet ist und das Anbindungselement (11) den Vorsprung (14) seitlich umgreift.

4. Stapellageranordnung nach Anspruch 3, **dadurch gekennzeichnet, dass** der Vorsprung (14) Außenseiten aufweist, die gegenüber einer Achse der Schraube (15) geneigt sind.

5. Stapellageranordnung nach Anspruch 4, **dadurch gekennzeichnet, dass** das Anbindungselement (11) geneigte Innenseiten (16) aufweist, deren Neigung an die zugehörigen Außenseiten angepasst ist.

6. Stapellageranordnung nach einem der Ansprüche 1 bis 5, **dadurch gekennzeichnet, dass** sich der Schlitz (12) bis in einen Hohlraum (13) des Ständers (2) erstreckt.

7. Stapellageranordnung nach einem der Ansprüche 1 bis 6, **dadurch gekennzeichnet, dass** der Ständer (2) als Strangpresselement oder Rollformprofil ausgebildet ist.

8. Stapellageranordnung nach einem der Ansprüche 1 bis 7, **dadurch gekennzeichnet, dass** drei Arten (8, 9, 10) von Ständern (2) vorgesehen sind, wobei eine erste Art (8) einen kreuzartigen Querschnitt, eine zweite Art (9) einen T-förmigen Querschnitt und eine dritte Art (10) einen abgewinkelten Querschnitt aufweist.

9. Stapellageranordnung nach Anspruch 8, **dadurch gekennzeichnet, dass** die Ständer (2) der ersten Art (8) in Reihen angeordnet sind, wobei die Ständer (2) einer Reihe auf Lücke zu Ständern (2) einer benachbarten Reihe angeordnet sind.

10. Stapellageranordnung nach einem der Ansprüche 1 bis 9, **dadurch gekennzeichnet, dass** die Querverbinder (3) einen Schlitz (17) aufweisen, in den eine das Anbindungselement (11) durchragende Schraube (18) eingeschraubt ist.

11. Stapellageranordnung nach Anspruch 10, **dadurch gekennzeichnet, dass** der Schlitz (17) in einem Vorsprung (19) angeordnet ist, den das Anbindungselement (11) seitlich umgreift.

12. Stapellageranordnung nach Anspruch 11, **dadurch gekennzeichnet, dass** der Vorsprung (19) Seitenflanken aufweist, die zu einer Achse der Schraube (18) geneigt sind, und das Anbindungselement (11) insbesondere geneigte Innenseiten (20) aufweist, deren Neigung an die Neigung der Seitenflanken angepasst ist.

13. Stapellageranordnung nach einem der Ansprüche 10 bis 12, **dadurch gekennzeichnet, dass** das Anbindungselement (11) einen Tragabschnitt (22) aufweist, an dem der Querverbinder (3) befestigt ist, wobei der Tragabschnitt (22) unterhalb des Querverbinders (3) angeordnet ist.

14. Stapellageranordnung nach einem der Ansprüche 10 bis 13, **dadurch gekennzeichnet, dass** der Querverbinder (3) als Strangpresselement oder Rollformprofil ausgebildet sind.

15. Stapellageranordnung nach einem der Ansprüche 10 bis 14, **dadurch gekennzeichnet, dass** sich der Schlitz (17) bis in einen Hohlraum (24) im Querverbinder erstreckt.

## Claims

1. Stack storage assembly (1) for containers, having multiple uprights (2) that are connected to one another by transverse connectors (3), wherein at least one transverse connector (3) is connected to uprights (2) via connection elements (11), each of which bears against a contact surface (21) of an upright (2), **characterized in that** the contact surface (21) comprises a slot (12) into at which at least one self-cutting or self-tapping screw (15) protruding through the connection element (11) is screwed.

2. Stack storage assembly according to claim 1, **characterized in that** the slot (12) is continuous over the length of the upright (2).

3. Stack storage assembly according to claim 1 or 2, **characterized in that** the slot (12) is embodied in a projection (14) and the connection element (11) laterally grips around the projection (14).

4. Stack storage assembly according to claim 3, **characterized in that** the projection (14) comprises outer sides that are sloped relative to an axis of the screw (15).

5. Stack storage assembly according to claim 4, **characterized in that** the connection element (11) comprises sloped inner sides (16), the slope of which is matched to the corresponding outer sides.

6. Stack storage assembly according to one of claims 1 to 5, **characterized in that** the slot (12) extends all the way into a cavity (13) of the upright (2).

7. Stack storage assembly according to one of claims 1 to 6, **characterized in that** the upright (2) is embodied as an extruded element or roll formed profile.

8. Stack storage assembly according to one of claims 1 to 7, **characterized in that** three types (8, 9, 10) of uprights (2) are provided, wherein a first type (8) has a cross-like cross-section, a second type (9) has a T-shaped cross-section, and a third type (10) has an angled cross-section.

9. Stack storage assembly according to claim 8, **characterized in that** the uprights (2) of the first type (8) are arranged in rows, wherein the uprights (2) of one row are arranged such that they are staggered from uprights (2) of an adjacent row.

10. Stack storage assembly according to one of claims 1 to 9, **characterized in that** the transverse connectors (3) comprise a slot (17) into which a screw (18) protruding through the connection element (11) is screwed.

11. Stack storage assembly according to claim 10, **characterized in that** the slot (17) is embodied in a projection (19) around which the connection element laterally grips.

12. Stack storage assembly according to claim 11, **characterized in that** the projection (19) comprises side flanks that are sloped towards an axis of the screw (18), and the connection element (11) comprises in particular sloped inner sides (20), the slope of which is matched to the slope of the side flanks.

13. Stack storage assembly according to one of claims 10 to 12, **characterized in that** the connection element (11) comprises a load bearing section (22) to which the transverse connector is attached, wherein the load bearing section (22) is arranged below the transverse connector (3).

14. Stack storage assembly according to one of claims 10 to 13, **characterized in that** the transverse connector (3) is embodied as one extruded element or roll formed profile.

15. Stack storage assembly according to one of claims 10 to 14, **characterized in that** the slot (17) extends all the way into a cavity (14) in the transverse connector.

## Revendications

1. Dispositif de stockage par empilement (1) pour conteneurs avec plusieurs montants (2), qui sont reliés les entre eux par des raccords transversaux (3), sachant qu'au moins un raccord transversal (3) est relié aux montants (2) par le biais d'éléments de liaison (11) dont chacun repose sur une surface d'appui (21) d'un montant (2), **caractérisé en ce que** la surface d'appui (21) comporte une fente (12) dans laquelle est vissée au moins une vis autotaraudeuse ou autofileteuse (15) traversant l'élément de liaison (11).

2. Dispositif de stockage par empilement selon la revendication 1, **caractérisé en ce que** la fente (12) traverse la longueur du montant (2).

3. Dispositif de stockage par empilement selon la revendication 1 ou 2, **caractérisé en ce que** la fente (12) est constituée dans une saillie (14) et l'élément de liaison (11) entoure latéralement la saillie (14).

4. Dispositif de stockage par empilement selon la revendication 3, **caractérisé en ce que** la saillie (14) comporte des côtés extérieurs, qui sont inclinés par rapport à un axe de la vis (15).

5. Dispositif de stockage par empilement selon la revendication 4, **caractérisé en ce que** l'élément de liaison (11) comporte des côtés intérieurs inclinés (16), dont l'inclinaison est adaptée aux côtés extérieurs correspondants.

6. Dispositif de stockage par empilement selon l'une quelconque des revendications 1 à 5, **caractérisé en ce que** la fente (12) s'étend dans un espace creux (13) du montant (2).

7. Dispositif de stockage par empilement selon l'une quelconque des revendications 1 à 6, **caractérisé en ce que** le montant (2) est constitué comme un élément extrudé ou un profilé formé par roulage.

8. Dispositif de stockage par empilement selon l'une quelconque des revendications 1 à 7, **caractérisé en ce que** trois exécutions (8, 9, 10) de montants (2) sont prévues, sachant qu'une première exécution (8) comporte une section croisée, une deuxième exécution (9) comporte une section en forme de T et une troisième exécution (10) comporte une section coudée.

9. Dispositif de stockage par empilement selon la revendication 8, **caractérisé en ce que** les montants (2) de la première exécution (8) sont disposés en rangées, sachant que les montants (2) d'une rangée sont disposés en chicane par rapport aux montants (2) d'une rangée voisine.

10. Dispositif de stockage par empilement selon l'une quelconque des revendications 1 à 9, **caractérisé en ce que** les raccords transversaux (3) comportent une fente (17) dans laquelle est vissée une vis (18) traversant l'élément de liaison (11).

11. Dispositif de stockage par empilement selon la revendication 10, **caractérisé en ce que** la fente (17) est disposée dans une saillie (19), que l'élément de liaison (11) entoure latéralement.

12. Dispositif de stockage par empilement selon la revendication 11, **caractérisé en ce que** la saillie (19) comporte des flancs latéraux, qui sont inclinés par rapport à un axe de la vis (18) et l'élément de liaison (11) comporte en particulier des côtés intérieurs inclinés (20), dont l'inclinaison est adaptée à l'inclinaison des flancs latéraux.

13. Dispositif de stockage par empilement selon l'une quelconque des revendications 10 à 12, **caractérisé en ce que** l'élément de liaison (11) comporte une section porteuse (22), à laquelle est fixé le raccord transversal (3), sachant que la section porteuse (22) est disposée en dessous du raccord transversal (3).

14. Dispositif de stockage par empilement selon l'une quelconque des revendications 10 à 13, **caractérisé en ce que** le raccord transversal (3) est constitué comme un élément extrudé ou un profilé formé par roulage.

15. Dispositif de stockage par empilement selon l'une quelconque des revendications 10 à 14, **caractérisé en ce que** la fente (17) s'étend dans le raccord transversal jusque dans un espace creux (24).
